# EUROPEAN PATENT SPECIFICATION

(11) **EP 0 941 878 B1**
(45) Date of publication and mention of the grant of the patent: **28.05.2003**
(21) Application number: 99104642.6
(22) Date of filing: 09.03.1999
(51) Int. Cl.: B60H 1/00, B60H 1/24

(54) **Disc cam drive with actuation shaft**
Nockenscheibenantrieb mit Betätigungswelle
Entraînement pour disque à cames avec arbre de commande

(30) Priority: 10.03.1998 DE 19810176
(43) Date of publication of application: 15.09.1999
(73) Proprietor: Valeo Klimasysteme GmbH, 96473 Rodach (DE)
(72) Inventor: Fuhrmann, Lutz, 96479 Weitramsdorf (DE)
(74) Representative: Lemaire, Marc

(56) References cited:
- DE-A- 4 420 160
- US-A- 5 052 282
- US-A- 5 245 886
- US-A- 5 363 718

## Description

The invention relates to a disc cam drive with a housing and at least one disc cam which is arranged to be integral in rotation with an actuating shaft and which exhibits at least one control curve. A disc cam drive of this type, wherein the cam plate is driven by a flexible shaft, is known from US-A- 5,052,282, see figure 1 and col. 2, line 13-17 of this document. Such disc cam drives are installed in motor vehicles, for example, for controlling the air distribution flaps in a heating and air conditioning appliance.

In this case, a disc cam of the disc cam drive can be adjusted in rotation by means of an actuating shaft so that, for example, the motion of an operating element, enclosed positively within the control curve, is transferred, for example by means of further levers, in order to control flaps or valves.

The actuation of known disc cam drives was achieved hitherto by the use of a 90° change in direction of the actuating torque into a direction perpendicular to the direction of rotation of the disc cam.

Because of the predetermined layout of the many operating elements on the instrument panel of a motor vehicle, and because of the inflexible choice of actuators, the position for fitting the disc cam drive inside the vehicle is also predetermined, preventing a diverse and versatile arrangement of the actuator.

The object of the invention is to devise a disc cam drive which can be installed at various points in the motor vehicle, as well as in any chosen fitting position, and yet can be actuated via the rigidly predetermined layout of the operating elements.

This object is achieved, on the disc cam drive according to the invention, in that a flexible shaft is fixed to the actuating shaft for actuation. Having this flexible shaft fitted means that the disc cam drive can be actuated from the inside of the vehicle by rotating an operating element, from any chosen point in the vehicle and in any of the various fitting positions. The flexibility of the shaft guarantees that the torque applied to the operating element for moving the disc cam drive can be transmitted from all conceivable directions directly to the actuating shaft of the disc cam drive.

It is regarded as an advantage if not just one disc cam but at least one further disc cam is fixed to the actuating shaft of the disc cam drive. In this case it is not just one air distribution flap which can be regulated, but rather a further flap can be regulated, for example, even one dependent on this first flap.

Likewise, it can be envisaged for the disc cams arranged on the actuating shaft to exhibit not just one control curve, but even several control curves. The individual control curves could then be arranged independently of one another on one surface of the disc cam or, equally, be separated from one another on the upper and lower sides of the disc cam. It would thus also be possible to control several different elements of a heating/air conditioning installation which are dependent on one another.

It may be impossible, for reasons of space, given the restricted dimensions of a motor vehicle, to transmit the actuating torque directly to the cam actuating shaft by means of the flexible shaft. In this case it is advantageous when a first gear wheel is fixed coaxially on the disc cam, this first gear wheel being actuated by a second gear wheel, which is connected to a second shaft parallel to and offset from the actuating shaft.

It is especially advantageous for a flexible shaft to lead from the second shaft for actuation. Thus, in the event that it is impossible, for reasons of space, to transmit the actuating torque directly in the actuation axis of the disc cam drive, the configuration mentioned allows the actuating torque to be transmitted to the disc cam drive parallel to the main actuating shaft.

By means of the torque transmitted to the second shaft by the flexible shaft, firstly a gear wheel is set in motion, which actuates the gear wheel fixed coaxially to the disc cam. In this way, the actuating torque is transferred onto the main actuating shaft of the disc cam drive.

In the motor vehicle, the disc cam drive is often fitted on the side of the heating/air conditioning appliance. With this arrangement, the actuation axis of the disc cam drive lies at right angles to the direction of travel and thus normally also at right angles to the axis of rotation of the control elements, themselves located on the instrument panel. For this reason it is advantageous for the flexible shaft which is installed for actuating the disc cam drive to be bent through 90°. This shaft thus forms the connection between the axis of rotation of the operating element and the actuation axis of the disc cam drive.

In a further embodiment of the disc cam drive according to the invention, the first gear wheel, which is located coaxially with the disc cam, is linked with the second gear wheel by means of a linking element, especially a third gear wheel or a toothed belt. By this means it is then possible, for example, to increase the spatial separation between the two axes of the disc cam drive further without having to increase the diameters of the actuating gear wheels in order to do so.

To form the linking element between the two gear wheels, one or more gear wheels can simply be used, or else a toothed transmission belt will suffice. In this embodiment, it is also possible to dispense with use of gear wheels and instead of these to fit drive wheels which permit the use of a V-belt.

Furthermore, it is viewed as advantageous if the gear wheels used, which transfer the torque between the two actuating shafts, are of different diameters. In this way, it is possible both to gear down as well as gear up the actuator mechanism. In this case, it is then possible, for example, for an extremely small rotation at the operating element inside the vehicle to cause a substantial rotation of the disc cam of the disc cam drive. In the opposite case, it can equally be envisaged that a substantial rotation of the operating element will generate only a very small rotation of the drive.

In accordance with the configuration presented, the disc cam drive according to the invention can be installed in a versatile and flexible way in the motor vehicle.

An exemplary embodiment of the invention is depicted in the following illustrations. These show:
- Figure 1: a sectional side view of the disc cam drive in accordance with the invention, with two possible parallel actuating shaft positions and flexible shafts for transmitting the torque.
- Figure 2: a bottom view of the disc cam drive in accordance with the invention, showing the gear wheels which transfer the torque.

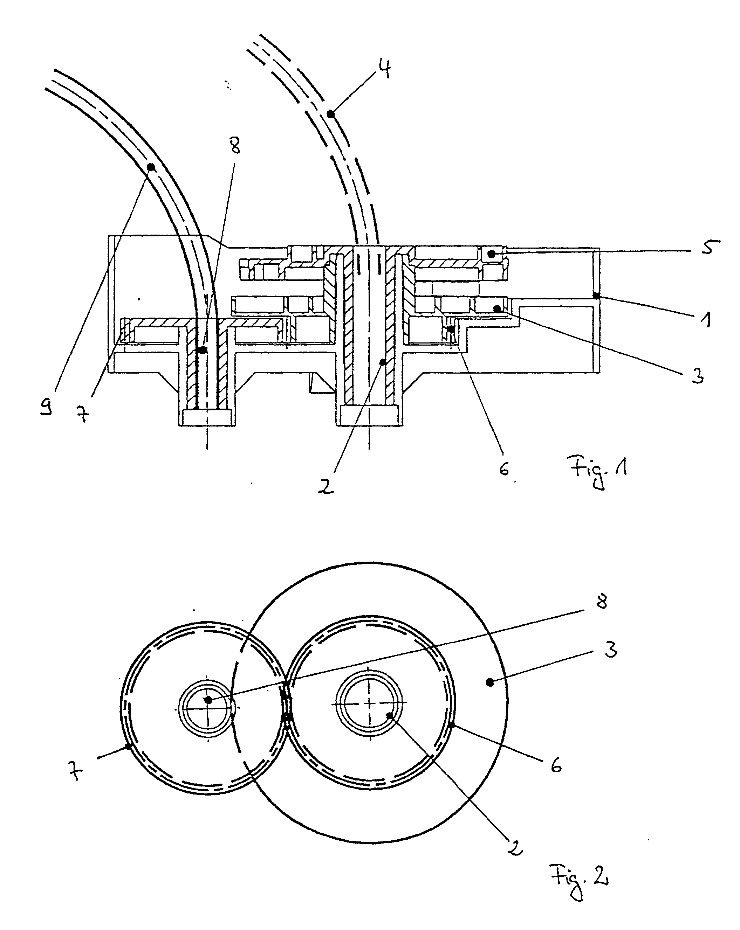

Figure 1 shows a disc cam drive with a housing 1. The disc cam drive possesses an actuating shaft 2, on which are fixed two disc cams 3 and 5, integral in rotation. In this case, each of the disc cams 3 and 5 has at least one control curve. In this way it is possible, in the present case, to use the two disc cams 3 and 5 to control several air distribution flaps, for example, and/or also a temperature flap or water valve which are dependent on one another.

The actuating torque, which for example is applied at the operating element inside the vehicle, is brought in directly onto the top of the actuating shaft 2 via a flexible shaft 4. In the event that, for reasons of space, direct transmission of the torque to the actuating shaft 2 is impossible, the disc cam drive depicted has a gear wheel 6 fixed coaxially to the disc cam 3, this gear wheel being driven by a second gear wheel 7 connected to a second shaft 8 offset parallel to the actuating shaft 2.

In this case it is possible, by means of a flexible shaft 9, to transmit the actuating torque directly to the more easily accessible actuating shaft 8 and to transfer the resultant movement of the gear wheel 7 to the actuating shaft 2 by means of the gear wheel 6. As already mentioned above, it is possible to increase the separation between the two actuating shafts 2 and 8 and then to form the link between the gear wheels 7 and 6, for example by means of a toothed belt.

In Figure 2, the disc cam drive in accordance with the invention is seen viewed from below. Here, it can be seen that a gear wheel 6 is fixed coaxially to the disc cam 3, which is arranged to be integral in rotation with the actuating shaft 2, such that the teeth of this gear wheel mesh directly with the teeth of a second gear wheel, which is connected to the second shaft 8, offset parallel to the actuating shaft 2.

As the two gearwheels 6 and 7 exhibit the same diameter and correspondingly the same number of teeth, the movement of the driven gear wheel 7 is transferred to the gear wheel 6 in a 1:1 ratio. As already mentioned above, it is equally possible to choose different diameters for the gear wheels, by means of which a gearing down or gearing up of the drive is possible, with the advantages previously mentioned. For reasons of clarity, the housing 1 surrounding the disc cam drive is not depicted in the view shown in Figure 2.

## Claims

1. Disc cam drive with a housing (1) and at least one disc cam (3) which is arranged to be integral in rotation with an actuating shaft and which exhibits at least one control curve, **characterised in that** a flexible shaft (4) is fixed to the actuating shaft (2) for actuation.

2. Disc cam drive according to Claim 1, **characterised in that** at least one further disc cam (5) is fixed to the actuating shaft (2).

3. Disc cam drive according to one of the previous claims, **characterised in that** a first gear wheel (6) is fixed coaxially to the disc cam (3), this gear wheel being driven by a second gear wheel (7) connected to a second shaft (8) offset parallel to the actuating shaft (2).

4. Disc cam drive according to one of the previous claims, **characterised in that** a flexible shaft (9) leads from the second shaft (8).

5. Disc cam drive according to one of the previous claims, **characterised in that** the flexible shaft (4, 9) is bent through 90°.

6. Disc cam drive according to one of the previous claims, **characterised in that** the first gear wheel (6) is linked to the second gear wheel (7) by means of a linking element, particularly a third gear wheel or a toothed belt.

7. Disc cam drive according to one of the previous claims, **characterised in that** the gear wheels (6, 7) are of different diameters.

## Patentansprüche

1. Kurvenscheibengetriebe mit einem Gehäuse (1) und wenigstens einer an einer Antriebswelle (2) drehfest angeordneten Kurvenscheibe (3), die mindestens eine Steuerkurve aufweist, **dadurch gekennzeichnet, daß** an der Antriebswelle (2) zum Antreiben eine flexible Welle (4) befestigt ist.

2. Kurvenscheibengetriebe nach Anspruch 1, **dadurch gekennzeichnet, daß** an der Antriebswelle (2) mindestens eine weitere Kurvenscheibe (5) befestigt ist.

3. Kurvenscheibengetriebe nach einem der vorherigen Ansprüche, **dadurch gekennzeichnet, daß** an der Kurvenscheibe (3) koaxial ein erstes Zahnrad (6) befestigt ist, das von einem zweiten Zahnrad (7) angetrieben ist, welches mit einer zur Antriebswelle (2) parallel versetzten zweiten Welle (8) verbunden ist.

4. Kurvenscheibengetriebe nach einem der vorherigen Ansprüche, **dadurch gekennzeichnet, daß** von der zweiten Welle (8) eine flexible Welle (9) abgeht.

5. Kurvenscheibengetriebe nach einem der vorherigen Ansprüche, **dadurch gekennzeichnet, daß** die flexible Welle (4,9) um 90° gebogen ist.

6. Kurvenscheibengetriebe nach einem der vorherigen Ansprüche, **dadurch gekennzeichnet, daß** das erste Zahnrad (6) mit dem zweiten Zahnrad (7) über ein Verbindungselement, insbesondere ein drittes Zahnrad oder einen Zahnriemen, in Verbindung steht.

7. Kurvenscheibengetriebe nach einem der vorherigen Ansprüche, **dadurch gekennzeichnet, daß** die Zahnräder (6, 7) unterschiedliche Durchmesser aufweisen.

## Revendications

1. Entraînement pour disque à came comprenant un boîtier (1) et au moins un disque à came (3) qui est arrangé pour être solidaire en rotation d'un arbre d'actionnement et qui présente au moins une courbe de commande, **caractérisé en ce qu'**un arbre flexible (4) est fixé à l'arbre d'actionnement (2) en vue de l'actionnement.

2. Entraînement pour disque à came selon la revendication 1, **caractérisé en ce qu'**au moins un autre disque à came (5) est fixé sur l'arbre d'actionnement (2).

3. Entraînement pour disque à came selon l'une quelconque des revendications précédentes, **caractérisé en ce qu'**une première roue d'engrenage (6) est fixée coaxialement au disque à came (3), cette roue d'engrenage étant entraînée par une deuxième roue d'engrenage (7) connectée à un deuxième arbre (8) décalé parallèlement à l'arbre d'actionnement (2).

4. Entraînement pour disque à came selon l'une quelconque des revendications précédentes, **caractérisé en ce qu'**un arbre flexible (9) part du deuxième arbre (8).

5. Entraînement pour disque à came selon l'une quelconque des revendications précédentes, **caractérisé en ce que** l'arbre flexible (4, 9) est coudé de 90°.

6. Entraînement pour disque à came selon l'une quelconque des revendications précédentes, **caractérisé en ce que** la première roue d'engrenage (6) est reliée à la deuxième roue d'engrenage (7) au moyen d'un élément de liaison, en particulier une troisième roue d'engrenage ou une courroie dentée.

7. Entraînement pour disque à came selon l'une quelconque des revendications précédentes, **caractérisé en ce que** les roues d'engrenage (6, 7) ont des diamètres différents.
